# EUROPEAN PATENT APPLICATION

(11) **EP 4 361 583 A1**
(43) Date of publication of application: **01.05.2024**
(21) Application number: 22827893.3
(22) Date of filing: 27.01.2022
(51) Int. Cl.: G01H 17/00, G01M 99/00

(54) **VIBRATION-MONITORING SYSTEM FOR ROTATING MACHINE, AND VIBRATION-MONITORING METHOD FOR ROTATING MACHINE**

(30) Priority: 22.06.2021 JP 2021103071
(71) Applicant: EBARA CORPORATION, Ota-ku, Tokyo 144-8510 (JP)
(72) Inventor: PARK, Hyunwoo, Tokyo 144-8510 (JP); SAKAMAKI, Yuta, Tokyo 144-8510 (JP); SEKIGUCHI, Takashi, Tokyo 144-8510 (JP); YAMADA, Yasumasa, Tokyo 144-8510 (JP)
(74) Representative: Wimmer, Hubert
(86) International application number: PCT/JP2022/002984
(87) International publication number: WO 2022/269969

(57) **Abstract**

The present invention relates to a system and a method of monitoring vibrations occurring in a rotary machine. A monitoring device (5) of the vibration monitoring system includes: a display (10) configured to display sensor installation information for a vibration sensor (7); and a processor configured to process the sensor installation information. The sensor installation information includes: a type image data that represents a type of the rotary machine (1) in a form of image; a model image data that represents a model of the rotary machine (1), associated with the type of rotary machine(1), in a form of image; an installation position data that represents a recommended installation position of the vibration sensor (7), associated with the model of rotary machine (1), in a form of image; and an installation direction data that represents an appropriate installation orientation of the vibration sensor (7), associated with the recommended installation position, in a form of image. The processer (11) causes each of the type image data, the model image data, and the installation position data to be displayed on the display (10) so as to be selectable for user.

## Description

### Technical Field

The present invention relates to a system and a method of monitoring vibrations occurring in a rotary machine, such as a pump, a fan, an electric motor, and a compressor.

### Background Art

When a rotary machine, such as a pump, a fan, an electric motor, and a compressor, is operated, vibrations occur in the rotary machine due to mechanical actions (e.g., rotation, and slide) of components installed in the rotary machine. Therefore, an inspection of the rotary machine generally includes monitoring of the vibration. User of the rotary machine periodically measures the vibration occurring in the rotary machine, and monitors measurement values and temporal changes in the measurement values in order to determine an occurrence of failure (abnormality), a need for maintenance, and so on.

In order to monitor the vibrations occurring in the rotary machine, a handheld vibration-meter is typically used. More specifically, an inspector presses a handheld vibration-meter against a plurality of measurement points on the rotary machine to thereby measure the vibrations thereof. In this case, the measurement points where the handheld vibration-meter are pressed against change with each measurement, and further, the measurement data varies depending on the experience and skills of the inspector. For these reasons, a rotary machine with vibration sensors pre-installed at predetermined positions is becoming increasingly popular in order to increase a reliability of vibration measurement data. Permanent installation of vibration sensors at predetermined locations on the rotary machine enables measurement data with high reliability to be obtained at any time.

### Citation List

### Patent Literature

Patent document 1: Japanese Patent No. 6867220

### Summary of Invention

### Technical Problem

In order to acquire appropriate vibration data, it is necessary to install vibration sensors at appropriate installation positions, respectively. For example, in a case of rotary machine having both of a load-side bearing and an anti-load-side bearing, only a vibration sensor installed near the anti-load-side bearing may not be able to detect an abnormality of the load-side bearing. Accordingly, depending on a type of rotary machine, it is necessary to install vibration sensors near the load-side bearing and near the anti-load-side bearing, respectively.

Further, accurate vibration data cannot be acquired unless an orientation of installation of each vibration sensor is aligned with an appropriate orientation in accordance with the installation position of each vibration sensor. For example, in a case of a vibration sensor that can measure vibrations in an axial direction, a radial direction, and a horizontal direction of a rotation axis (i.e., three axial directions), the vibration sensors need to be installed in a state where the measurement directions of these three axes with respect to the rotation axis are aligned in all the appropriate directions.

However, there are many types of rotary machine, and the appropriate installation position of the vibration sensor differs with each rotary machine. Further, the appropriate installation orientation of the vibration sensor also differs with each installation position of the vibration sensor. Therefore, it is difficult for a user inexperienced with vibration sensor and rotary machine to install the vibration sensor at the appropriate installation position in the rotary machine and in the appropriate installation orientation. In particular, when installing the vibration sensor to an alreadyexisting rotary machine, there is a risk that the vibration sensor may be installed in the wrong installation position and in the wrong installation orientation.

It is therefore an object of this invention to provide a vibration monitoring system for a rotary machine and a vibration monitoring method for a rotary machine, in which a vibration sensor is installed at an appropriate installation position and in an appropriate installation orientation to enable accurate vibration data to be acquired.

### Solution to Problem

In one embodiment, there is provided a vibration monitoring system for a rotary machine, comprising: at least one of rotary machine; at least one of vibration sensor installed in the rotary machine; and a monitoring device configured to monitor measurement value of the vibration sensor, wherein the monitoring device includes: a display configured to display sensor installation information for the vibration sensor; and a processor configured to process the sensor installation information displayed on the display, the sensor installation information includes: a type image data that represents a type of the rotary machine in a form of image; a model image data that represents a model of the rotary machine, associated with the type of rotary machine, in a form of image; an installation position data that represents a recommended installation position of the vibration sensor, associated with the model of rotary machine, in a form of image; and an installation direction data that represents an appropriate installation orientation of the vibration sensor, associated with the recommended installation position, in a form of image, and the processor causes each of the type image data, the model image data, and the installation position data to be displayed on the display so as to be selectable for user.

In one embodiment, the processor causes measurement values of the vibration sensor to be displayed on the display together with the installation position data associated with the vibration sensor.

In one embodiment, the processor is configured to check installation state of the vibration sensor based on measurement values of the vibration sensor.

In one embodiment, the processor is configured to compare measurement values of the vibration sensor with a predetermined threshold value to thereby determine a failure and/or a need for maintenance of the rotary machine.

In one embodiment, there is provided a vibration monitoring method for the rotary machine, comprising: displaying each of a type image data that represents a type of the rotary machine in a form of image; a model image data that represents a model of the rotary machine, associated with the type of rotary machine, in a form of image; an installation position data that represents a recommended installation position of the vibration sensor, associated with the model of rotary machine, in a form of image; and an installation orientation data that represents an appropriate installation orientation of the vibration sensor, associated with the recommended installation position, in a form of image, so as to be selectable for user.

In one embodiment, the vibration monitoring method further comprises: displaying measurement values of the vibration sensor on the display together with the installation position data associated with the vibration sensor.

In one embodiment, the vibration monitoring method further comprises: checking installation state of the vibration sensor based on measurement values of the vibration sensor.

In one embodiment, the vibration monitoring method further comprises: comparing measurement values of the vibration sensor with a predetermined threshold value to thereby determine a failure and/or a need for maintenance of the rotary machine.

### Advantageous Effects of Invention

According to the present invention, using the installation position data and the installation orientation data associated with the installation position data enables the vibration sensor to be installed in the rotary machine at an appropriate position and in an appropriate orientation through vision. Therefore, even if a user installing the vibration sensor is inexperienced with the rotary machine, accurate vibration data can be acquired. As a result, the user can accurately determine an occurrence of failure and/or a need for maintenance of the rotary machine.

### Brief Description of Drawings

[FIG. 1] FIG. 1 is a schematic view showing a vibration monitoring system for a rotary machine according to an embodiment;
[FIG. 2] FIG. 2 is a schematic view showing an example of a monitoring device;
[FIG. 3] FIG. 3 is a schematic view showing an example of a type image data displayed on a display;
[FIG. 4] FIG. 4 is a schematic view showing an example of a model image data displayed on the display;
[FIG. 5] FIG. 5 is a schematic view showing an example of the model image data displayed on the display;
[FIG. 6] FIG. 6 is a schematic view showing an example of an installation position data displayed on the display;
[FIG. 7] FIG. 7 is a schematic view showing an example of an installation orientation data displayed on the display;
[FIG. 8] FIG. 8 is a schematic view showing an example of a vibration data displayed on the display;
[FIG. 9] FIG. 9 is a schematic view showing a screen displayed on the display when setting or changing a threshold value or an allowable range for each vibration sensor; [FIG. 10] FIG. 10 is a flowchart showing an example of a method of determining whether or not an installation orientation of the vibration sensor is correct;
[FIG. 11A] FIG. 11A is a schematic view showing a state where the vibration sensor capable of measuring vibrations in an axial direction X, a vertical direction Y, and a horizontal direction Z with respect to a rotation axis, i.e., three directions is installed correctly; and
[FIG. 11B] FIG. 11B is a schematic view showing a state where the vibration sensor is shifted from the correctly installed state shown in FIG. 11A.

### Description of Embodiments

Hereinafter, embodiments according to the present invention will be described with reference to the drawings.

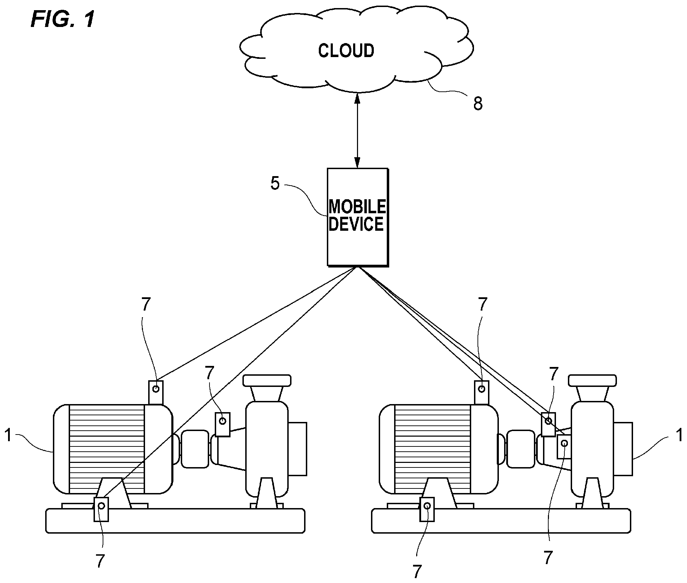

FIG. 1 is a schematic view showing a vibration monitoring system for a rotary machine according to an embodiment. The vibration monitoring system shown in FIG. 1 has two rotary machines (pumps) 1, vibration sensors 7 installed to each rotary machine 1, and a monitoring device 5 for monitoring measurement values of each vibration sensor 7. The rotary machine 1 of the vibration monitoring system shown in FIG. 1 is a pump. However, a type of rotary machine 1 can be freely selected. For example, the rotary machine 1 may be any of a fan, an electric motor, and a compressor. Further, the vibration monitoring system may have one rotary machine 1, or may have three or more rotary machines 1. In other words, the vibration monitoring system has at least one rotary machine 1.

The monitoring device 5 shown in FIG. 1 is a mobile device, such as a smartphone, a tablet computer, and a laptop computer. However, the monitoring device 5 may be, for example, an intelligent device that is not suitable for portable use, such as a desktop computer. In this case, the monitoring device 5 may be placed in a monitoring room of a factory where the rotary machine 1 is equipped.

As shown in FIG. 1, the vibration monitoring system may have a cloud system 8 that can send and receive data to and from the monitoring device 5. The cloud system 8 may be built in the factory where the rotary machine 1 is equipped, or may be built outside the factory where the rotary machine 1 is equipped.

Further, the vibration monitoring system includes at least one vibration sensor 7 installed in each rotary machine 1. The vibration sensor 7 is a device for measuring vibrations occurring during operating of the rotary machine 1, and a user for the rotary machine 1 determines a failure (e.g., breakdown) and/or a need for maintenance of the rotary machine 1 based on measurement values of each vibration sensor 7. In this embodiment, each vibration sensor 7 can be wired and/or wirelessly coupled to the monitoring device 5, and is configured to send and receive data, including the measurement values of vibrations occurring in the rotary machine 1, to and from the monitoring device 5. For example, each vibration sensor 7 includes a memory (not shown) capable of storing the measurement values, and a communicator (not shown) for sending and receiving data to and from the monitoring device 5.

Although not shown in the drawings, sending and receiving data between the vibration sensor 7 and the monitoring device 5 may be performed through a repeater. Further, the vibration sensor 7 may be configured so as to enable data to be sent and received from the cloud system 8. In this case, sending and receiving between data from the vibration sensor 7 and data from the monitoring device 5 is performed through the cloud system 8.

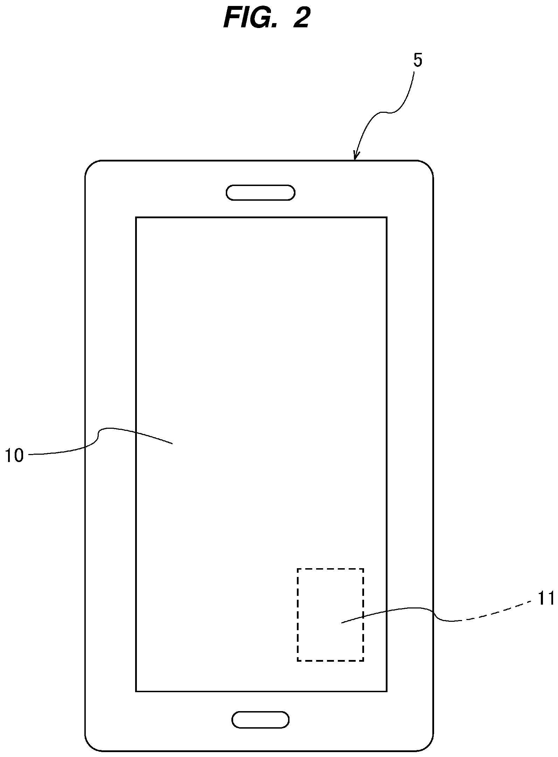

FIG. 2 is a schematic view showing an example of the monitoring device 5. The monitoring device 5 shown in FIG. 2 is a smartphone, and includes a display 10, a processor 11 capable of processing information (and/or data) displayed on the display 10, and a communicator (not shown) for sending and receiving data to and from external devices, such as the vibration sensor 7 and the cloud system 8. The display 10 is formed as a touch panel, for example. The processor 11 is an arithmetic processing unit, such as a CPU or GPU. Such an arithmetic processing unit can process various image data, which will be described below, and the measurement values of the vibration sensor 7 at high speed.

In this embodiment, the processor 11 causes the display 10 to display sensor installation information for installing the vibration sensor 7 at the appropriate installation position and in the appropriate installation orientation. The sensor installation information includes a type image data that represents a type of rotary machine 1 in a form of image, a model image data that represents a model of rotary machine 1 associated with the type of rotary machine 1 in a form of image, an installation position data that represents a recommended installation position of each vibration sensor 7 associated with the model of rotary machine 1 in a form of image, and an installation orientation data that represents an appropriate installation orientation of each vibration sensor 7 associated with the recommended installation position in a form of image.

In this embodiment, the sensor installation information is stored in advance in a memory (not shown) of the vibration sensor 7. User of the rotary machine 1 can operate the monitoring device 5 to send the sensor installation information from the vibration sensor 7 to the monitoring device 5. In one embodiment, the sensor installation information may be stored in advance in the monitoring device 5, or may be stored in advance in the cloud system 8. In a case where the sensor installation information is stored in the cloud system 8, the user of the rotary machine 1 can operate the monitoring device 5 to send the sensor installation information to the monitoring device 5 from the cloud system 8.

When the user installs the vibration sensor 7 to the rotary machine 1, the user operates the monitoring device 5 to display the sensor installation information on the display 10, and installs the vibration sensor 7 based on the sensor installation information displayed. This procedure makes it possible to install the vibration sensor 7 at the appropriate installation position and in the appropriate installation orientation, even if the user is inexperienced with the installation of the vibration sensor 7. As a result, the user can acquire the correct measurement values of the vibration sensor 7, so that the failure and/or the need for maintenance of the rotary machine 1 can be accurately determined.

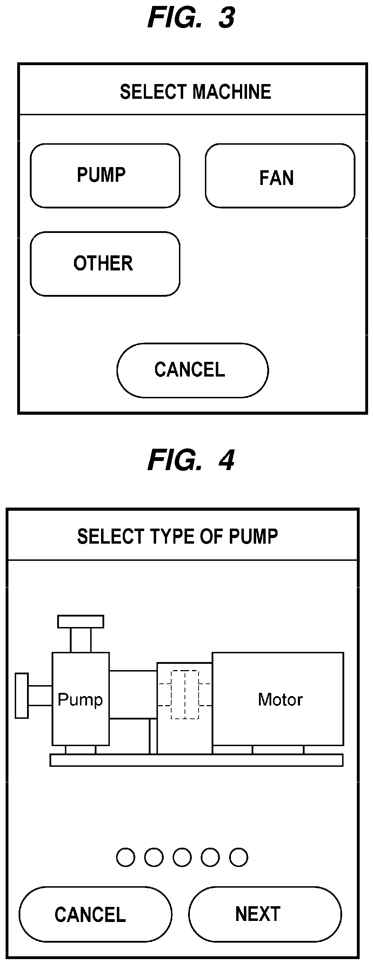

FIG. 3 is a schematic view showing an example of the type image data displayed on the display 10. The type image data shown in FIG. 3 is designed such that the type of rotary machine 1 can be selected from "PUMP", "FAN", and "OTHER". More specifically, the type image data shown in FIG. 3 has buttons corresponding to "PUMP", "FAN", and "OTHER". The user pushes (or touches) the button corresponding to the rotary machine 1, in which the vibration sensor 7 is to be installed, from the type image data shown in FIG. 3 to thereby select the type of the rotary machine 1.

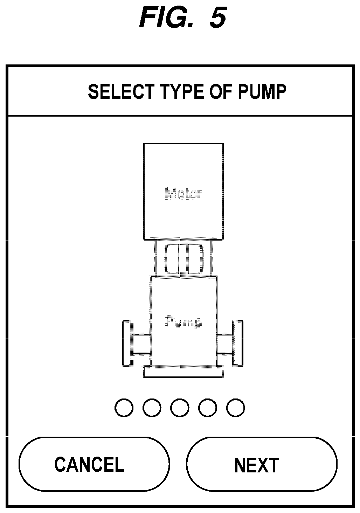

After the user selects the type of rotary machine 1, the processor 11 causes the model image data to be displayed on the display 10, the model image data representing the model of rotary machine 1 associated with the type of rotary machine 1 in a form of image. FIGS. 4 and 5 are schematic views each showing an example of the model image data displayed on the display 10. FIGS. 4 and 5 illustrate an example of the model image data respectively, when "PUMP" is selected in the type image data shown in FIG. 3.

The model image data shown in FIG. 4 is a model image data corresponding to a horizontal-shaft pump, and the model image data shown in FIG. 5 is a model image data corresponding to a vertical-shaft pump. The user can operate the monitoring device 5 (e.g., swipe a surface of the display 10) to switch the model image data displayed on the display 10 between the model image data shown in FIG. 4 and the model image data shown in FIG. 5. The user can select the model of the rotary machine 1, in which the vibration sensor 7 is to be installed, through vision while comparing the model image data displayed on the display 10 with the rotary machine 1. This procedure prevents the user from making a mistake in selecting the model of the rotary machine 1 in which the vibration sensor 7 is to be installed. With the model of the rotary machine 1 to be installed displayed on the display 10, the user can push (or touch) the button labeled as "NEXT" to select the model of the rotary machine 1 in which the vibration sensor 7 is to be installed.

In one embodiment, the model image data may include a button representing a series number or a model number of the rotary machine 1 in which the vibration sensor 7 is to be installed. When selecting the model of the rotary machine 1, the user may select from the buttons in the model image data displayed on the display 10 the series number or the model number that matches the series number or the model number indicated on a tag attached to the rotary machine 1.

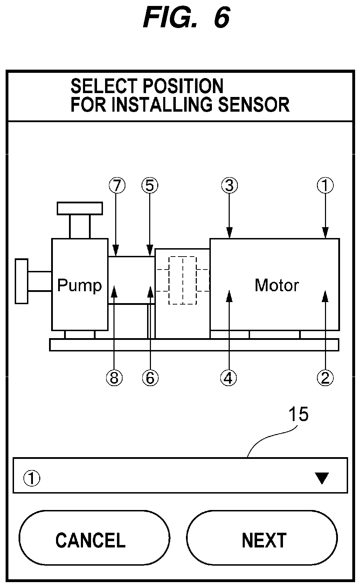

After the user selects the model of the rotary machine 1, the processor 11 causes an installation position data representing a recommended installation positions of each vibration sensor 7, which is associated with the model of the rotary machine 1, in a form of image to be displayed on the display 10. FIG. 6 is a schematic view showing an example of the installation position data displayed on the display 10. The installation position data is, for example, data that illustrates the installation positions of each vibration sensor 7 recommended by the manufacturer of the rotary machine 1 on the exterior image of the rotary machine 1. FIG. 6 illustrates the installation position data when the model image data corresponding to the horizontal-shaft pump shown in FIG. 4 has been selected. In FIG. 6, eight recommended installation positions are shown. The user may install the vibration sensors 7 at all recommended installation positions, or may select some of the eight recommended installation positions shown to install the vibration sensors 7.

The installation position data shown in FIG. 6 includes a selection button 15 for selecting a sensor number assigned to each recommended installation position. The user operates the selection button 15 to select the sensor number (i.e., installation position) of the vibration sensor 7 to be installed, and in this state, pushes (or touches) the button labeled as "NEXT". When the user pushes the button labeled as "NEXT", the processor 11 causes the installation orientation data, representing the appropriate installation orientation of the vibration sensor 7 associated with the selected recommended installation position in a form of image, to be displayed on the display 10.

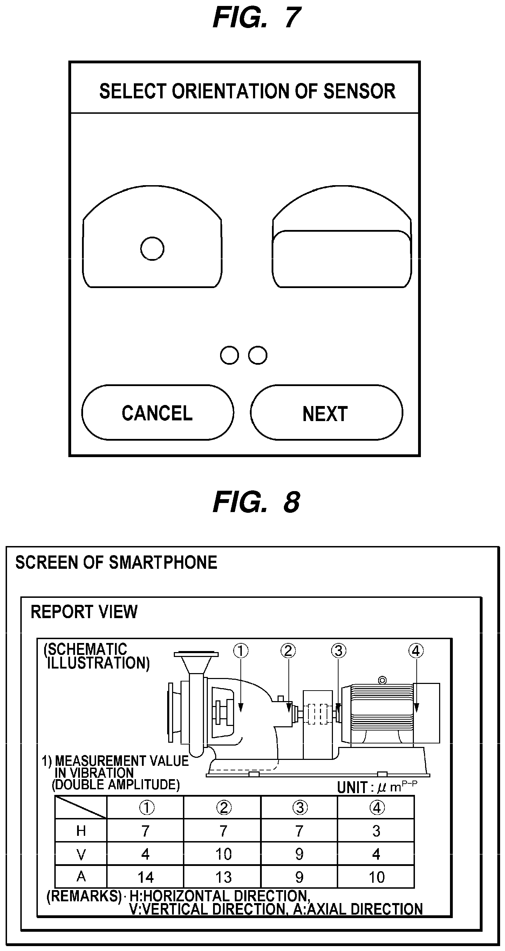

FIG. 7 is a schematic view showing an example of the installation orientation data displayed on the display 10. The user can recognize, through vision, an appropriate installation orientation displayed on the display 10, which corresponds to the selected installation position of the vibration sensor 7. Therefore, the user can install the vibration sensor 7 in the rotary machine 1 without making a mistake in the installation orientation.

When a plurality of vibration sensors 7 are to be installed in the rotary machine 1, the user pushes a cancel button shown in FIG. 7 to display again the installation position data shown in FIG. 6 on the display 10. Next, the user operates the selection button 15 to select the sensor number (i.e., installation position) of the next vibration sensor 7 to be installed, and then the appropriate installation orientation of the next vibration sensor 7 is displayed on the display 10. The user performs these operations for all the vibration sensors 7 to be installed, so that all the vibration sensors 7 can be installed in the appropriate installation positions and in the appropriate installation orientations.

In this manner, according to this embodiment, the user can install the vibration sensors 7 in the rotary machine 1 while confirming the appropriate installation positions and the appropriate installation orientations of each vibration sensor 7 through vision. Therefore, even if the user is inexperienced with the rotary machine 1, the user can install the vibration sensors 7 in the rotary machine 1 at the appropriate installation positions and in the appropriate installation orientations. As a result, accurate vibration data can be acquired from the vibration sensors 7, thereby enabling the user to accurately determine an occurrence of failure and/or a need for maintenance of the rotary machine.

The measurement values of each vibration sensor 7 are stored in any one of the vibration sensor 7, the monitoring device 5, and the cloud system 8 in association with the installation position and the installation orientation of each vibration sensor 7. In one embodiment, the measurement values of each vibration sensor 7 may be stored in any two or all of the vibration sensor 7, the monitoring device 5, and the cloud system 8 in association with the installation position and the installation orientation of each vibration sensor 7. When the measurement values of each vibration sensor 7 are stored in several devices, even if one of the devices, in which the measurement values of the vibration sensors 7 have been stored, is failed, the measurement data of the vibration sensors 7 can be restored from the other devices.

When the user checks the vibration data of the rotary machine 1 (i.e., the measurement values of each vibration sensor 7), the processor 11 preferably causes the measurement values of each vibration sensor 7 stored in any of the vibration sensors 7, the monitoring device 5, and the cloud system 8, together with the installation position and the installation orientation of the vibration sensor 7 associated with the measurement values, to be displayed on the display 10.

FIG. 8 is a schematic view showing an example of the vibration data displayed on the display 10. The vibration data shown in FIG. 8 includes an exterior view of the rotary machine 1 in which the installation positions of the vibration sensors 7 are clearly indicated by the sensor numbers of each vibration sensor 7, and a list indicating the measurement values of each vibration sensor 7 identified by the sensor number, and the installation position and the installation orientation of the vibration sensor 7 associated with that measurement values. According to the vibration data as shown in FIG. 8, the user can identify at a glance the measurement values and the measurement position of each vibration sensor 7. Therefore, the user can immediately identify the vibration sensor 7 that have a failure, and the installation position thereof.

When the measurement values of each vibration sensor 7 exceed a predetermined threshold value, or when the measurement values of each vibration sensor 7 exceed a predetermined allowable range, the processor 11 may cause an alarm to be issued from the monitoring device 5. The predetermined threshold value and the predetermined allowable range are set for each vibration sensor 7, and are stored in advance in the monitoring device 5, for example. The user can readily detect the occurrence of failure and/or the need for maintenance of the rotary machine 1 by means of the alarm.

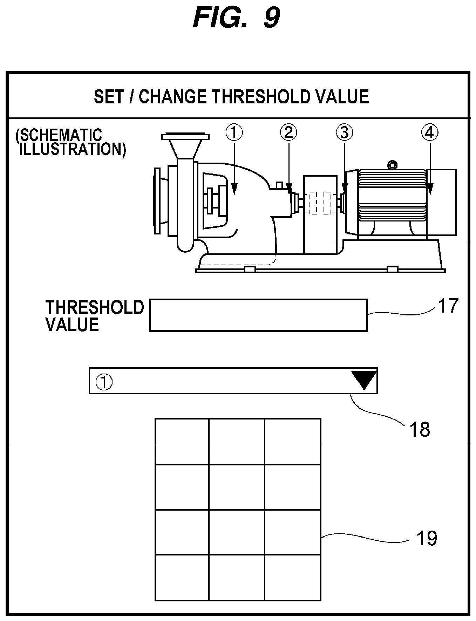

In one embodiment, the monitoring device 5 may be configured to enable the user to set or change the threshold value or the allowable range for each vibration sensor 7. FIG. 9 is a schematic view showing a screen displayed on the display 10 when setting or changing the threshold value or the allowable range for each vibration sensor 7. The screen shown in FIG. 9 includes an input window 17 for entering the threshold value to be set or changed, a selection button 18 for selecting the sensor number assigned to the vibration sensor 7 whose threshold value is to be set or changed, and a numeric keypad 19 for entering the threshold set or changed value in the input window 17. Further, as shown in FIG. 9, an exterior view of the rotary machine 1 is preferably displayed on this screen as well, where the installation positions of the vibration sensors 7 are clearly indicated by the sensor numbers of each vibration sensors 7. The user can identify through vision the position of the vibration sensor 7 whose threshold value is to be changed, thus preventing the user from mistaking the vibration sensor 7 whose set value is to be re-set or changed.

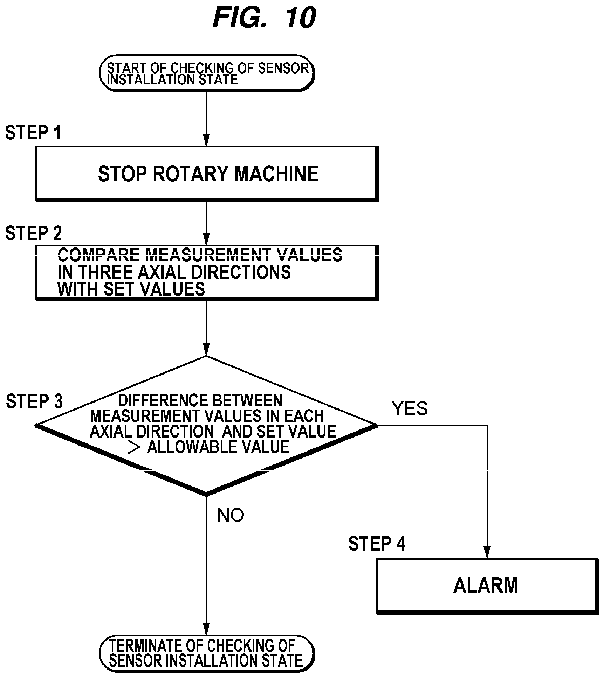

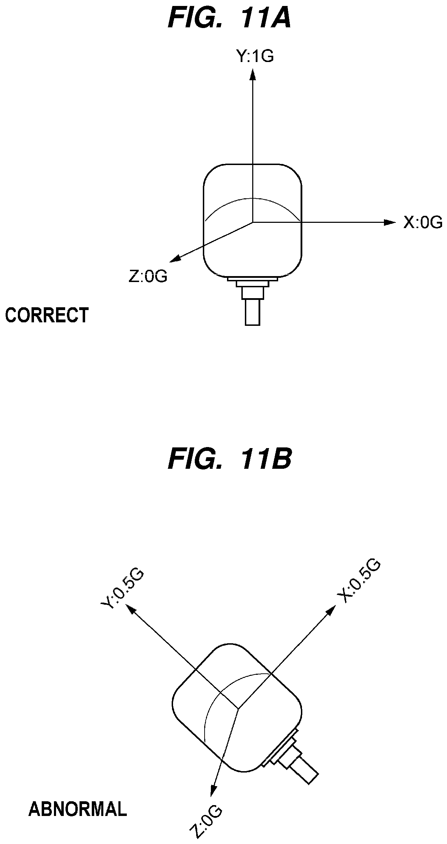

Over an extended period of time after the vibration sensor 7 has been installed in the rotary machine 1, the installation orientation of the vibration sensor 7 may shift from the initial installation orientation (i.e., the appropriate installation orientation) due to vibrations occurring in the rotary machine 1, or due to contacts with the vibration sensor 7 caused by an inspector. Therefore, the monitoring device 5 preferably has a function for determining whether or not the installation orientation of the vibration sensor 7 is correct. Hereinafter, a method of determining whether or not the installation orientation of the vibration sensor 7 is correct will be described with reference to FIGS. 10 and 11.

FIG. 10 is a flowchart showing an example of a method of determining whether or not the installation orientation of the vibration sensor 7 is correct. FIG. 11A is a schematic view showing a state where the vibration sensor 7 capable of measuring vibrations in the three directions with respect to the rotation axis (i.e., an axial direction X, a vertical direction Y, and a horizontal direction Z) is installed correctly. FIG. 11B is a schematic view showing a state where the vibration sensor 7 is shifted from the correctly installed state shown in FIG. 11A. The vibration sensor 7 shown in FIG. 11A is installed in the rotary machine 1 whose rotation axis extends in the horizontal direction. Accordingly, the axial direction X lies in the same plane as the horizontal direction Z (in the horizontal plane), and the vertical Y-axis extends vertically with respect to this horizontal plane. The vibration sensor 7 shown in FIGS. 11A and 11B is a vibration sensor capable of detecting gravitational acceleration.

As shown in FIG. 10, first, the rotating machine 1 is stopped (STEP 1). Next, the monitoring device 5 is operated to acquire measurement values of the three axes of the vibration sensor 7. The vibration sensor 7 shown in FIGS. 11A and 11B is a vibration sensor capable of detecting gravitational acceleration. Next, the processor 11 of the monitoring device 5 compares the measurement values in the three axes with set values for determination (STEP 2).

As described above, in this vibration sensor 7, the X-axis direction and the Z-axis direction lie in the horizontal plane, and the Y-axis direction extends vertically with respect to this horizontal plane. Therefore, in the example described with reference to FIGS. 11A and 11B, the set values for determining the X-axis direction and the Z-axis direction are 0, and the set value for determining the Y-axis direction is 1. When the vibration sensor 7 is installed correctly, the measurement values in the X-axis direction and the Z-axis direction are almost 0, and the measurement value in the Y-axis direction is almost 1, as shown in FIG. 11A.

In contrast, as shown in FIG. 11B, if the vibration sensor 7 is shifted from the correct installation orientation, at least one of the measurement values in the three directions deviates from the set value for determination. In the example shown in FIG. 11B, the measurement values in the X-axis direction and the Y-axis direction have been deviated from the set values for determination. The processor 11 stores in advance the allowable values for differences between the measurement values in each axis direction and the set values for determination. When the difference between the measurement values in each axial direction and the set value for determination exceeds the allowable value (see "YES" in STEP 3), the processor 11 issues an alarm to notify the user that the installation orientation of the vibration sensor 7 is shifted (see "STEP 4"). When the differences between the measurement values in each axis direction and the set values for determination are within the allowable range, the processor 11 terminates the operation for checking the installation direction without issuing an alarm (see "NO" in STEP 3).

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The invention can be used in a system and a method of monitoring vibrations occurring in a rotary machine, such as a pump, a fan, an electric motor, and a compressor.

### Reference Signs List

- 1: rotary machine (pump)
- 2: vibration sensor
- 5: monitoring device
- 7: vibration sensor
- 8: cloud system
- 10: display
- 11: processor
- 15, 18: selection button
- 17: input window
- 19: numeric keypad

## Claims

1. A vibration monitoring system for a rotary machine, comprising:
at least one of rotary machine;
at least one of vibration sensor installed in the rotary machine; and
a monitoring device configured to monitor measurement value of the vibration sensor,
wherein the monitoring device includes:
a display configured to display sensor installation information for the vibration sensor; and
a processor configured to process the sensor installation information displayed on the display,
the sensor installation information includes: a type image data that represents a type of the rotary machine in a form of image; a model image data that represents a model of the rotary machine, associated with the type of rotary machine, in a form of image; an installation position data that represents a recommended installation position of the vibration sensor, associated with the model of rotary machine, in a form of image; and an installation direction data that represents an appropriate installation orientation of the vibration sensor, associated with the recommended installation position, in a form of image, and
the processor causes each of the type image data, the model image data, and the installation position data to be displayed on the display so as to be selectable for user.

2. The vibration monitoring system for the rotary machine according to claim 1, wherein the processor causes measurement values of the vibration sensor to be displayed on the display together with the installation position data associated with the vibration sensor.

3. The vibration monitoring system for the rotary machine according to claim 1 or 2, wherein the processor is configured to check installation state of the vibration sensor based on measurement values of the vibration sensor.

4. The vibration monitoring system for the rotary machine according to any one of claims 1 through 3, wherein the processor is configured to compare measurement values of the vibration sensor with a predetermined threshold value to thereby determine a failure and/or a need for maintenance of the rotary machine.

5. A vibration monitoring method for the rotary machine, comprising: displaying each of a type image data that represents a type of the rotary machine in a form of image; a model image data that represents a model of the rotary machine, associated with the type of rotary machine, in a form of image; an installation position data that represents a recommended installation position of the vibration sensor, associated with the model of rotary machine, in a form of image; and an installation orientation data that represents an appropriate installation orientation of the vibration sensor, associated with the recommended installation position, in a form of image, so as to be selectable for user.

6. The vibration monitoring method for the rotary machine according to claim 5, further comprising: displaying measurement values of the vibration sensor on the display together with the installation position data associated with the vibration sensor.

7. The vibration monitoring method for the rotary machine according to claim 5 or 6, further comprising: checking installation state of the vibration sensor based on measurement values of the vibration sensor.

8. The vibration monitoring method for the rotary machine according to any one of claims 5 through 7, further comprising: comparing measurement values of the vibration sensor with a predetermined threshold value to thereby determine a failure and/or a need for maintenance of the rotary machine.
